# EUROPEAN PATENT APPLICATION

(11) **EP 4 481 373 A1**
(43) Date of publication of application: **25.12.2024**
(21) Application number: 23181217.3
(22) Date of filing: 23.06.2023
(51) Int. Cl.: G01N 27/12

(54) **CHEMO-RESISTIVE SENSOR DEVICE**

(71) Applicant: Infineon Technologies AG, 85579 Neubiberg (DE)
(72) Inventor: BREUER, Werner, 93161 Sinzing-Viehhausen (DE); MEYER, Markus, 93161 Sinzing (DE)
(74) Representative: Hersina, Günter

(57) **Abstract**

A chemo-resistive sensor device, comprising: a substrate comprising an electrically nonconductive layer having an electrically nonconductive surface; a chemo-resistive sensor arrangement comprising a frame structure defining a framed portion of the electrically nonconductive surface, a printed sensor layer, and a pair of electrodes; a plurality of contacts; and an upper connecting arrangement, wherein a first electrode of the pair of electrodes is electrically connected to one of the contacts by the upper connecting arrangement; and a lowered connecting arrangement, wherein a second electrode of the pair of electrodes is electrically connected to one of the contacts by the lowered connecting arrangements; wherein the lowered connecting arrangement comprises a first via extending through the framed portion of the electrically nonconductive surface, a second via extending through the electrically nonconductive surface outside of the framed portion of the electrically nonconductive surface, and a lateral connector electrically connecting the first via and the second via.

## Description

Embodiments relate to a chemo-resistive sensor device. More particularly, embodiments relate to a chemo-resistive sensor device having a printed sensor layer, which is created by applying a dispersion to an electrically nonconductive surface of a substrate and by drying the dispersion at the electrically nonconductive surface of the substrate.

Obtaining printed sensor layers having a defined pattern by applying and solidifying a liquid sensor material is a challenge when using selective deposition techniques such as inkjet printing. In particular, a material accumulation on the edge of the pattern of the printed sensor layer due to the Marangoni effect leads to a conductive path around the desired pattern of the printed sensor layer. This may result in poor yield in chemo-resistive sensors having such a printed sensor layer.

Thus, there is a need for an improved chemo-resistive sensor device having a printed sensor layer.

The problem is solved by a chemo-resistive sensor device, comprising:
a substrate comprising an electrically nonconductive layer having an electrically nonconductive surface at an upper side of the electrically nonconductive layer;
one or more chemo-resistive sensor arrangements formed at the substrate, wherein each of the chemo-resistive sensor arrangements comprises
   a frame structure defining a framed portion of the electrically nonconductive surface,
   a printed sensor layer covering the framed portion of the electrically nonconductive surface, wherein the printed sensor layer comprises a border portion adjacent to the frame structure and a center portion surrounded by the border portion, and
   a pair of electrodes arranged between the center portion of the printed sensor layer and the framed portion of the electrically nonconductive surface;
a plurality of contacts arranged at the electrically nonconductive surface outside of the framed portions of the electrically nonconductive surface, wherein at each of the chemo-resistive sensor arrangements each electrode of the pair of electrodes is electrically connected to one of the contacts so that a change of an electrical resistance of the printed sensor layer of each of the chemo-resistive sensor arrangements can be sensed at the plurality of contacts; and
one or more upper connecting arrangements, wherein at each of the chemo-resistive sensor arrangements a first electrode of the pair of electrodes is electrically connected to one of the contacts by one of the upper connecting arrangements; and
one or more lowered connecting arrangements, wherein at each of the chemo-resistive sensor arrangements a second electrode of the pair electrodes is electrically connected to one of the contacts by one of the lowered connecting arrangements;
wherein each of the lowered connecting arrangements comprises
   a first via extending through the framed portion of the electrically nonconductive surface, wherein the first via is electrically connected to one of the second electrodes,
   a second via extending through the electrically nonconductive surface outside of the framed portion of the electrically nonconductive surface, wherein the second via is electrically connected to one of the contacts, and
   a lateral connector electrically connecting the first via and the second via, wherein the lateral connector is arranged within the electrically nonconductive layer or below the electrically nonconductive layer, so that the lateral electrical connector is electrically insulated from the printed sensor layer in a range of the border portion of the printed sensor layer.

The substrate may be made from any material, such as silicon or glass, which provides mechanical properties suitable as a support for the further elements of the chemo-resistive sensor device. The substrate may comprise one or more layers.

One of those layers is an electrically nonconductive layer having an electrically nonconductive surface at an upper side of the electrically nonconductive layer. The term upper side (as well as other relative terms, such as above, below, lower, laterally and the like, used herein) refers to a situation, in which the chemo-resistive sensor device is orientated in such way that the electrically nonconductive surface is orientated parallel to the earth's surface and facing away from the earth's surface.

One or more chemo-resistive sensor arrangements are formed at the substrate.

In general, a chemo-resistive sensor arrangement is an electronic arrangement that changes its electrical resistance in response to changes of a present chemical agent. The chemical agent, for which a chemo-resistive sensing arrangement is sensitive, depends on the material composition of the chemo-resistive sensing arrangement.

One problem lies in that most of the suitable material compositions interact with more than one chemical agent, which is also known as cross sensitivity, so that it is demanding to distinguish the influence of different chemical agents in a mixture of chemical agents on the electrical resistance of the chemo-resistive sensor arrangement. In order to reduce the cross sensitivity, a plurality of chemo-resistive sensor arrangements comprising different material compositions may be used.

Each of the chemo-resistive sensor arrangements comprises a printed sensor layer made of a specific material composition sensitive for one or more chemical agents, which changes its electrical resistance in presence of the one or more chemical agents.

A printed layer is a layer, which is manufactured by applying the material of the layer in a liquid state and by transferring the material in situ into a solid state.

In order to achieve a defined pattern of the printed sensor layer, the liquid sensor material is applied at each of the chemo-resistive sensor arrangements to a framed portion of the electrically nonconductive surface, which is bordered on all sides by a frame structure. The frame structure may be a portion of the substrate, which is elevated compared to the framed portion of the electrically nonconductive surface. The frame structure may have a circular, a polygonal or any other shape.

For example, the frame structure may have the shape of a wall, possibly made by adding a material, such as an oxide, above the nonconductive layer. The frame structure may also be made by removing a portion from the nonconductive layer so that a trough shaped recess is formed within the nonconductive layer.

The printed sensor layer comprises a border portion adjacent to the frame structure and a center portion surrounded by the border portion. Although it is not desired, a material accumulation on the border portion of the printed sensor layer, for example due to the Marangoni effect, often occurs during manufacturing the printed sensor layer. Such material accumulation is often referred to as "coffee stain".

Furthermore, each of the chemo-resistive sensor arrangements comprises a pair of electrodes arranged between the center portion of the printed sensor layer and the framed portion of the electrically nonconductive surface. Each of the electrodes is electrically connected to the printed sensor layer, so that an electrical resistance between the electrodes depends on the electrical resistance of the printed sensor layer.

The chemo-resistive sensor device comprises a plurality of contacts arranged at the electrically nonconductive surface outside of the one or more framed portions of the electrically nonconductive surface. At each of the chemo-resistive sensor arrangements, each electrode of the pair of electrodes is electrically connected to one of the contacts so that a change of an electrical resistance of the printed sensor layer of each of the chemo-resistive sensor arrangements can be sensed at the plurality of contacts. Such arrangement allows to electrically connecting the chemo-resistive sensor device to an electronic measuring circuit in an easy way.

At each of the chemo-resistive sensor arrangements, a first electrode of the pair of electrodes is electrically connected to one of the contacts by an upper connecting arrangement. The upper connecting arrangement may be completely arranged above the upper side of the electrically nonconductive layer. In this case, the upper connecting arrangement may extend between the frame structure and the border portion of the printed sensor layer so that the upper connecting arrangement is in direct contact to the material accumulation at the border portion of the printed sensor layer.

In addition, at each of the chemo-resistive sensor arrangements, a second electrode of the pair of electrodes is electrically connected to one of the contacts by a lowered connecting arrangement. The lowered connecting arrangement electrically connects the second electrode through a first via extending through the framed portion of the electrically nonconductive surface, a second via extending through the electrically nonconductive surface outside of the framed portion of the electrically nonconductive surface and a lateral connector electrically connecting the first via and the second via. The lateral connector is arranged within the electrically nonconductive layer or below the electrically nonconductive layer, so that the lateral electrical connector is electrically insulated from the printed sensor layer in a range of the border portion of the printed sensor layer.

Thus, the lower connecting arrangement is partially arranged below the upper side of the electrically nonconductive layer. Such arrangement ensures that a direct contact between the lower connecting arrangement and the material accumulation at the border portion of the printed sensor layer is avoided.

As a result, a measuring current applied to the respective chemo-resistive sensor arrangement is prevented from flowing from the first electrode to the second electrode through the material accumulation at the border portion of the printed sensor layer. Instead, the measuring current is forced to flow through the center portion of the printed sensor layer so that a larger sensor area is active for sensing the chemical agents.

Although the chemo-resistive sensor device according to the disclosure cannot avoid unwanted material accumulations, the negative effects of such material accumulations are avoided in a reliable way.

According to embodiments, the printed sensor layer of each of the chemo-resistive sensor arrangements is manufactured by applying a dispersion above the framed portion of the electrically nonconductive surface and by drying the dispersion, wherein the dispersion comprises a solvent and an electrically conductive component.

The term dispersion in general refers to a mixture of a liquid and solid particles. Here, the dispersion comprises a solvent and electrically conductive (solid) components, such as nanoparticles. The type of the solvent on the top of the electrically conductive components depend on the use case. Synonyms for the term dispersion are ink or paste.

The dispersion may be dried by removing the solvent.

According to embodiments, the printed sensor layer of each of the chemo-resistive sensor arrangements is configured in such way that the electrical resistance of the printed sensor layer changes depending on a concentration of an ambient gas.

In this case, the chemo-resistive sensor device may be used as a gas sensor for detecting one or more target gases in a mixture of gases. The dispersion may comprise functionalized graphene, wherein the graphene for each of the printed sensor layers may be functionalized in different ways so that cross-sensitivity may be reduced. In particular, the chemo-resistive sensor device may be used for air quality monitoring in mobile devices such as in smart phones. The device may be configured for establishing an air quality index (AQI) based on a detection of the gases nitrogen dioxide (NO₂), ozone (Oa) and carbon monoxide (CO), for example. Moreover, the detection of further gases as well as further implementations and configurations of the device are possible.

According to embodiments, the substrate comprises an electrically conductive layer arranged parallel to the electrically nonconductive layer and below the electrically nonconductive layer, wherein the electrically conductive layer acts as the lateral connector. Forming the lateral connector as an electrically conductive layer facilitates manufacturing the chemo-resistive sensor device. Moreover, the additional layer stiffens the substrate so that it is less prone to damage under mechanical stress.

According to embodiments, the substrate comprises a further electrically nonconductive layer arranged parallel to the electrically conductive layer and below the electrically conducting layer. Such sandwich-like embodiment comprising the (upper) electrically nonconductive layer, the further (lower) electrically nonconductive layer and the electrically conductive layer acting as the lateral connector provides superior mechanical stability, while being easy to manufacture. Moreover, the further (lower) electrically nonconductive layer acts as an insulator preventing possible electrical shorts at the lower side of the lateral connector.

According to embodiments, each of the first electrodes and the second electrodes of the chemo-resistive sensor arrangements is electrically connected to one of the contacts individually. Such embodiments allow evaluating the signals from the chemo-resistive sensor arrangements independent from each other. If, for example, the upper connecting arrangement or the lower connecting arrangement of one of chemo-resistive sensor arrangements occurs, the other chemo-resistive sensor arrangements remain operational. Moreover, such embodiments allow using evaluation circuits, which require that the chemo-resistive sensor arrangements are galvanically isolated from each other.

According to embodiments, the second electrodes of the pair of electrodes of each of the chemo-resistive sensor arrangements are electrically connected to a common contact of the contacts and each of the first electrodes of the pair of electrodes of each of the chemo-resistive sensor arrangements is electrically connected to one further contact of the contacts individually. Such embodiments require less contacts that the embodiments described above. Thus, manufacturing of the chemo-resistive sensor device is facilitated and the space requirements are lowered.

According to embodiments, the first electrode of each the chemo-resistive sensor arrangements comprises a frame-like portion framing the second electrode of the respective chemo-resistive sensor arrangement. During operation, such frame-like portion exhibits the same electrical potential as the material accumulation at the border portion of the printed sensor layer. Thus, a measuring current is prevented from directly flowing from the material accumulation to the second electrode so that shorting the center portion of the printed sensor layer is prevented.

The frame-like portion of the first electrode of the respective chemo-resistive sensor arrangement typically surrounds the second electrode of the respective chemo-resistive sensor arrangement at all sides. A shape of the frame-like portion may correspond to the shape of the shape of the frame structure of the respective chemo-resistive sensor arrangement. In other words, the frame-like portion may have the same circular, polygonal or other shape as the frame structure.

In a further aspect, the problem is solved by a method for manufacturing a chemo-resistive sensor device. The method comprising the steps:
providing a substrate comprising an electrically nonconductive layer having an electrically nonconductive surface at an upper side of the electrically nonconductive layer;
manufacturing one or more chemo-resistive sensor arrangements at the substrate, wherein manufacturing of each of the chemo-resistive sensor arrangements comprises the steps of
   forming a frame structure defining an framed portion of the electrically nonconductive surface,
   arranging a pair of electrodes at the framed portion of the electrically nonconductive surface, and
   printing a printed sensor layer covering the framed portion of the electrically nonconductive surface, wherein the printed sensor layer comprises a border portion adjacent to the frame structure and a center portion surrounded by the border portion, wherein the pair of electrodes is arranged between the center portion of the printed sensor layer and the framed portion of the electrically nonconductive surface;
arranging a plurality of contacts at the electrically nonconductive surface outside of the framed portions of the electrically nonconductive surface, at each of the chemo-resistive sensor arrangements electrically connecting each electrode of the pair of electrodes to one of the contacts so that a change of an electrical resistance of the printed sensor layer of each of the chemo-resistive sensor arrangements can be sensed at the plurality of contacts; and
manufacturing one or more upper connecting arrangements, wherein at each of the chemo-resistive sensor arrangements a first electrode of the pair of electrodes is electrically connected to one of the contacts by one of the upper connecting arrangements; and
manufacturing one or more lowered connecting arrangements, wherein at each of the chemo-resistive sensor arrangements a second electrode of the pair electrodes is electrically connected to one of the contacts by one of the lowered connecting arrangements;
wherein manufacturing of each of the lowered connecting arrangements comprises the steps of
   manufacturing a first via extending through the framed portion of the electrically nonconductive surface, wherein the first via is electrically connected to one of the second electrodes,
   manufacturing a second via extending through the electrically nonconductive surface outside of the framed portion of the electrically nonconductive surface, wherein the second via is electrically connected to one of the contacts, and
   manufacturing a lateral connector electrically connecting the first via and the second via, wherein the lateral connector is arranged within the electrically nonconductive layer or below the electrically nonconductive layer, so that the lateral electrical connector is electrically insulated from the printed sensor layer in a range of the border portion of the printed sensor layer.

Preferred embodiments of the invention are subsequently discussed with respect to the accompanying drawings, in which:
- Figure 1: illustrates a first embodiment of a chemo-resistive sensor device according to the disclosure in a schematic cross-sectional side view;
- Figure 2: illustrates the first embodiment of a chemo-resistive sensor device according to the disclosure in a schematic top view;
- Figure 3: illustrates a second embodiment of a chemo-resistive sensor device according to the disclosure in a schematic cross-sectional side view; and
- Figure 4: illustrates a third embodiment of a chemo-resistive sensor device according to the disclosure in a schematic top view.

Equal or equivalent elements or elements with equal or equivalent functionality are denoted in the following description by equal or equivalent reference numerals.

In the following description, a plurality of details is set forth to provide a more thorough explanation of embodiments of the present disclosure. However, it will be apparent to those skilled in the art that embodiments of the present disclosure may be practiced without these specific details. In other instances, well-known structures and devices are shown in block diagram form rather than in detail in order to avoid obscuring embodiments of the present disclosure. In addition, features of the different embodiments described hereinafter may be combined with each other, unless specifically noted otherwise.

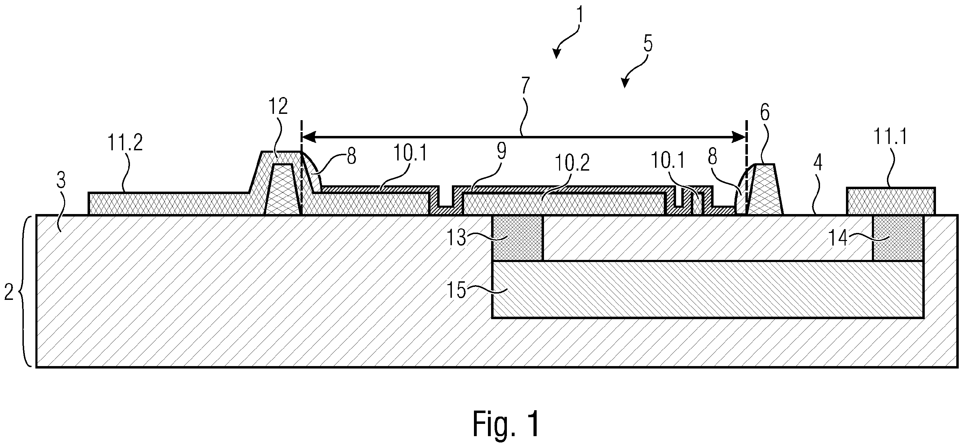

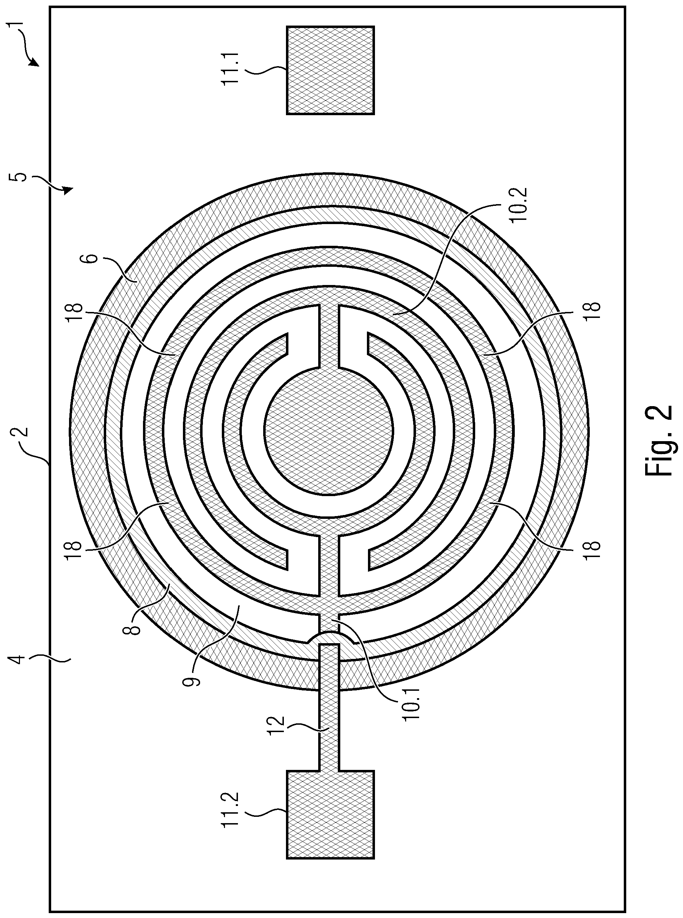

Figure 1 illustrates a first embodiment of a chemo-resistive sensor device 1 according to the disclosure in a schematic cross-sectional side view and Figure 2 illustrates the first embodiment of a chemo-resistive sensor device 1 according to the disclosure in a schematic top view.

The chemo-resistive sensor device, comprises:
a substrate 2 comprising an electrically nonconductive layer 3 having an electrically nonconductive surface 4 at an upper side of the electrically nonconductive layer 3;
one or more chemo-resistive sensor arrangements 5 formed at the substrate 2, wherein each of the chemo-resistive sensor arrangements 5 comprises
   a frame structure 6 defining a framed portion 7 of the electrically nonconductive surface 4,
   a printed sensor layer 8, 9 covering the framed portion 7 of the electrically
   nonconductive surface 4, wherein the printed sensor layer 8, 9 comprises a border portion 8 adjacent to the frame structure 6 and a center portion 9 surrounded by the border portion 8, and
   a pair of electrodes 10 arranged between the center portion 9 of the printed sensor layer 8, 9 and the framed portion 7 of the electrically nonconductive surface 4;
a plurality of contacts 11 arranged at the electrically nonconductive surface 4 outside of the one or more framed portions 7 of the electrically nonconductive surface 4, wherein at each of the chemo-resistive sensor arrangements 5 each electrode 10 of the pair of electrodes 10 is electrically connected to one of the contacts 11 so that a change of an electrical resistance of the printed sensor layer 8, 9 of each of the chemo-resistive sensor arrangements 5 can be sensed at the plurality of contacts 11;
one or more upper connecting arrangements 12, wherein at each of the chemo-resistive sensor arrangements 5 a first electrode 10.1 of the pair of electrodes 10 is electrically connected to one of the contacts 11 by one of the upper connecting arrangements 12; and
one or more lowered connecting arrangements 13, 14, 15, wherein at each of the chemo-resistive sensor arrangements 5 a second electrode 10.2 of the pair of electrodes 10 is electrically connected to one of the contacts 11 by one of the lowered connecting arrangements 13, 14, 15;
wherein each of the lowered connecting arrangements 13, 14, 15 comprises
   a first via 13 extending through the framed portion 7 of the electrically nonconductive surface 4, wherein the first via 13 is electrically connected to one of the second electrodes 10.2,
   a second via 14 extending through the electrically nonconductive surface 4 outside of the framed portion 7 of the electrically nonconductive surface 4, wherein the second via 14 is electrically connected to one of the contacts 11, and
   a lateral connector 15 electrically connecting the first via 13 and the second via 14, wherein the lateral connector 15 is arranged within the electrically nonconductive layer 3 or below the electrically nonconductive layer 3, so that the lateral electrical connector 15 is electrically insulated from the printed sensor layer 8, 9 in a range of the border portion 8 of the printed sensor layer 8, 9.

According to embodiments, the printed sensor layer 8, 9 of each of the chemo-resistive sensor arrangements 5 is manufactured by applying a dispersion above the framed portion 7 of the electrically nonconductive surface 4 and by drying the dispersion, wherein the dispersion comprises a solvent and an electrically conductive component.

According to embodiments, the printed sensor layer 8, 9 of each of the chemo-resistive sensor arrangements 5 is configured in such way that the electrical resistance of the printed sensor layer 8, 9 changes depending on a concentration of an ambient gas.

According to embodiments, each of the first electrodes 10.1 and the second electrodes 10.2 of the chemo-resistive sensor arrangements 5 is electrically connected to one of the contacts 11 individually.

According to embodiments, the first electrode 10.1 of each the chemo-resistive sensor arrangements 5 comprises a frame-like portion 18 framing the second electrode 10.2 of the respective chemo-resistive sensor arrangement 5.

The chemo-resistive sensor device 1 shown in Figures 1 and 2 comprises a substrate 2 and one chemo-resistive sensor arrangement 5, which is formed at the electrically nonconductive surface 4 at the upper side of the electrically nonconductive layer 3 of the substrate 2. The chemo-resistive sensor arrangement 5 comprises a frame structure 6, which surrounds a framed portion 7 of the electrically nonconductive surface 4, a printed sensor layer 8, 9, a first electrode 10.1 and a second electrode 10.2.

As an example, the frame structure 6 is formed as a wall extending above the electrically nonconductive surface 4. The printed sensor layer 8, 9 covers the framed portion 7 of the electrically nonconductive surface 4. The printed sensor layer 8, 9, which is formed by applying and solidifying a liquid to the well formed by the frame structure 6 and the electrically nonconductive surface 4, comprises a border portion 8 adjacent to the frame structure 6 and a center portion 9 surrounded by the border portion 8. The printed sensor layer 8, 9 comprises a material accumulation at the border portion 8. Both of the pair of electrodes 10.1 and 10.2 are vertically arranged between the center portion 9 of the printed sensor layer 8, 9 and the framed portion 7 of the electrically nonconductive surface 4.

The chemo-resistive sensor device 1 shown in Figures 1 and 2 comprises a contact 11.1 and a contact 11.2, which are both arranged at the electrically nonconductive surface 4 outside of the framed portions 7 of the electrically nonconductive surface 4. The first electrode 10.1 is individually electrically connected to the contact 11.2 through the upper connecting arrangement 12 and the second electrode 10.2 is individually electrically connected to the contact 11.1 through the lowered connecting arrangement 13, 14, 15, so that a change of an electrical resistance of the printed sensor layer 8, 9 of the chemo-resistive sensor arrangement 5 can be sensed at the two contacts 11.1 and 11.2.

The lowered connecting arrangement 13, 14, 15 of Figures 1 and 2 comprises a first via 13 extending through the framed portion 7 of the electrically nonconductive surface 4, a second via 14 extending through the electrically nonconductive surface 4 outside of the framed portion 7 and a lateral connector 15 electrically connecting the first via 13 and the second via 14, wherein the lateral connector 15 is arranged within the electrically nonconductive layer 3.

The first via 13 is arranged in a lateral range of the center portion 9 of the printed sensor layer 8, 9. The lateral electrical connector 15 is electrically insulated from the printed sensor layer 8, 9 in a range of the border portion 8 of the printed sensor layer 8, 9.

As a result, a measuring current applied to the respective chemo-resistive sensor arrangement 5 is prevented from flowing from the first electrode 10.1 to the second electrode 10.2 through the material accumulation at the border portion 9 of the printed sensor layer 8, 9. Instead, the measuring current is forced to flow through the center portion 9 of the printed sensor layer 8, 9 so that a larger sensor area is active for sensing the chemical agents.

The first electrode 10.1 of the chemo-resistive sensor arrangement 5 comprises a frame-like portion 18 framing the second electrode 10.2 of the respective chemo-resistive sensor arrangement 5 at all sides so that the second electrode 10.2 is laterally completely surrounded by the frame-like portion 18 of the first electrode 10.1.

In a further aspect, the disclosure provides a method for manufacturing a chemo-resistive sensor device. The method comprises the steps:
providing a substrate 2 comprising an electrically nonconductive layer 3 having an electrically nonconductive surface 4 at an upper side of the electrically nonconductive layer 3;
manufacturing one or more chemo-resistive sensor arrangements 5 at the substrate 2, wherein manufacturing of each of the chemo-resistive sensor arrangements 5 comprises the steps of
   forming a frame structure 6 defining an framed portion 7 of the electrically nonconductive surface 4,
   arranging a pair of electrodes 10 at the framed portion 7 of the electrically nonconductive surface 4, and
   printing a printed sensor layer 8, 9 covering the framed portion 7 of the electrically nonconductive surface 4, wherein the printed sensor layer 8, 9 comprises a border portion 8 adjacent to the frame structure 6 and a center portion 9 surrounded by the border portion 8, wherein the pair of electrodes 10 is arranged between the center portion 9 of the printed sensor layer 8, 9 and the framed portion 7 of the electrically nonconductive surface 4;
arranging a plurality of contacts 11 at the electrically nonconductive surface 4 outside of the one or more framed portions 7 of the electrically nonconductive surface 4, at each of the chemo-resistive sensor arrangements 5 electrically connecting each electrode 10 of the pair of electrodes 10 to one of the contacts 11 so that a change of an electrical resistance of the printed sensor layer 8, 9 of each of the chemo-resistive sensor arrangements 5 can be sensed at the plurality of contacts 11; and
manufacturing one or more upper connecting arrangements 12, wherein at each of the chemo-resistive sensor arrangements 5 a first electrode 10.1 of the pair of electrodes 10 is electrically connected to one of the contacts 11 by one of the upper connecting arrangements 12; and
manufacturing one or more lowered connecting arrangements 13, 14, 15, wherein at each of the chemo-resistive sensor arrangements 5 a second electrode 10.2 of the pair electrodes 10 is electrically connected to one of the contacts 11 by one of the lowered connecting arrangements 13, 14, 15;
wherein manufacturing of each of the lowered connecting arrangements 13, 14, 15 comprises the steps of
   manufacturing a first via 13 extending through the framed portion 7 of the electrically nonconductive surface 4, wherein the first via 13 is electrically connected to one of the second electrodes 10.2,
   manufacturing a second via 14 extending through the electrically nonconductive surface 4 outside of the framed portion 7 of the electrically nonconductive surface 4, wherein the second via 14 is electrically connected to one of the contacts 11, and
   manufacturing a lateral connector 15 electrically connecting the first via 13 and the second via 14, wherein the lateral connector 15 is arranged within the electrically nonconductive layer 3 or below the electrically nonconductive layer 3, so that the lateral electrical connector 15 is electrically insulated from the printed sensor layer 8, 9 in a range of the border portion 8 of the printed sensor layer 8, 9.

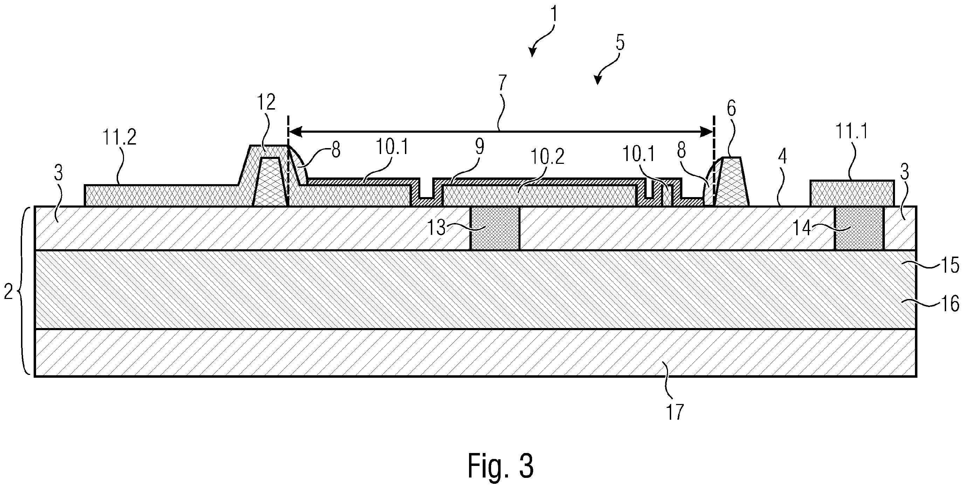

Figure 3 illustrates a second embodiment of a chemo-resistive sensor device 1 according to the disclosure in a schematic cross-sectional side view. The second embodiment is based on the first embodiment. Thus, in the following only the differing features are explained.

According to embodiments, the substrate 2 comprises an electrically conductive layer 16 arranged parallel to the electrically nonconductive layer 3 and below the electrically nonconductive layer 3, wherein the electrically conductive layer 5 acts as the lateral connector 15.

According to embodiments, the substrate 2 comprises a further electrically nonconductive layer 17 arranged parallel to the electrically conductive layer 16 and below the electrically conducting layer 16.

The chemo-resistive sensor device 1 shown in Figure 3 comprises a modified lowered connecting arrangement 13, 14, 15, wherein the lateral connector 15 is arranged below the electrically nonconductive layer 3. In particular, the substrate 2 comprises an electrically conductive layer 16 arranged parallel to the electrically nonconductive layer 3 and below the electrically nonconductive layer 3, wherein the electrically conductive layer 5 acts as the lateral connector 15.

Moreover, in Figure 3, the substrate 2 comprises a further electrically nonconductive layer 17 arranged parallel to the electrically conductive layer 16 and below the electrically conducting layer 16.

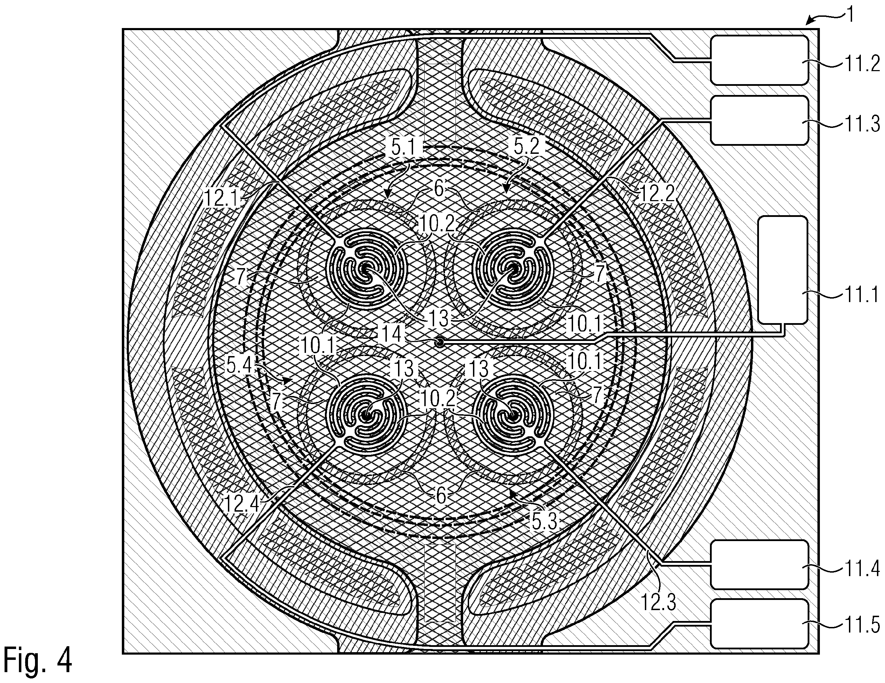

Figure 4 illustrates a third embodiment of a chemo-resistive sensor device according to the disclosure in a schematic top view. The third embodiment is based on the second embodiment. Thus, in the following only the differing features are explained.

According to embodiments, the second electrodes 10.2 of the pair of electrodes 10 of each of the chemo-resistive sensor arrangements 5 are electrically connected to a common contact 11.1 of the contacts 11, and wherein each of the first electrodes 10 of the pair of electrodes 10 of each of the chemo-resistive sensor arrangements 5 is electrically connected to one further contact 11.2-11.5 of the contacts 11 individually.

The third embodiment of the chemo-resistive sensor device 1 comprises four chemo-resistive sensor arrangements 5.1 to 5.4 formed at the same substrate 2.

Each of these four chemo-resistive sensor arrangements 5 corresponds to the chemo-resistive sensor arrangements 5 shown in Figures 1-3.

The first electrode 10.1 of the chemo-resistive sensor arrangements 5.1 is individually connected through the upper connecting arrangement 12.1 to the contact 11.2, the first electrode 10.1 of the chemo-resistive sensor arrangements 5.2 is individually connected through the upper connecting arrangement 12.2 to the contact 11.3, the first electrode 10.1 of the chemo-resistive sensor arrangements 5.3 is individually connected through the upper connecting arrangement 12.3 to the contact 11.4, and the first electrode 10.1 of the chemo-resistive sensor arrangements 5.4 is individually connected through the upper connecting arrangement 12.4 to the contact 11.5.

The chemo-resistive sensor device 1 of Figure 4 comprises a lowered connecting arrangement 13, 14, 15, which is common to the four chemo-resistive sensor arrangements 5.1 to 5.4. Each of the second electrodes 10.2 of the chemo-resistive sensor arrangements 5.1 to 5.4 is connected to one of a plurality of first vias 13 of the lowered connecting arrangement 13, 14, 15. Each of the first vias 13 is electrically connected to a lateral connector 15 (not shown in Figure 4) arranged within the electrically nonconductive layer 3 or below the electrically nonconductive layer 3, wherein the lateral connector 15 is electrically connected to one second via 14, which is connected to the contact 11.1.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The above described is merely illustrative, and it is understood that modifications and variations of the arrangements and the details described herein will be apparent to others skilled in the art. It is the intent, therefore, to be limited only by the scope of the impending claims and not by the specific details presented by way of description and explanation above.

### References:

[1] US 2022/0163475 A1
[2] US 2019/0378776 A1
[3] EP 4 016 065 A1

## Claims

1. A chemo-resistive sensor device, comprising:
a substrate (2) comprising an electrically nonconductive layer (3) having an electrically nonconductive surface (4) at an upper side of the electrically nonconductive layer (3);
one or more chemo-resistive sensor arrangements (5) formed at the substrate (2), wherein each of the chemo-resistive sensor arrangements (5) comprises
a frame structure (6) defining a framed portion (7) of the electrically nonconductive surface (4),
a printed sensor layer (8, 9) covering the framed portion (7) of the electrically nonconductive surface (4), wherein the printed sensor layer (8, 9) comprises a border portion (8) adjacent to the frame structure (6) and a center portion (9) surrounded by the border portion (8), and
a pair of electrodes (10) arranged between the center portion (9) of the printed sensor layer (8, 9) and the framed portion (7) of the electrically nonconductive surface (4);
a plurality of contacts (11) arranged at the electrically nonconductive surface (4) outside of the one or more framed portions (7) of the electrically nonconductive surface (4), wherein at each of the chemo-resistive sensor arrangements (5) each electrode (10) of the pair of electrodes (10) is electrically connected to one of the contacts (11) so that a change of an electrical resistance of the printed sensor layer (8, 9) of each of the chemo-resistive sensor arrangements (5) can be sensed at the plurality of contacts (11);
one or more upper connecting arrangements (12), wherein at each of the chemo-resistive sensor arrangements (5) a first electrode (10.1) of the pair of electrodes (10) is electrically connected to one of the contacts (11) by one of the upper connecting arrangements (12); and
one or more lowered connecting arrangements (13, 14, 15), wherein at each of the chemo-resistive sensor arrangements (5) a second electrode (10.2) of the pair of electrodes (10) is electrically connected to one of the contacts (11) by one of the lowered connecting arrangements (13, 14, 15);
wherein each of the lowered connecting arrangements (13, 14, 15) comprises
a first via (13) extending through the framed portion (7) of the electrically nonconductive surface (4), wherein the first via (13) is electrically connected to one of the second electrodes (10.2),
a second via (14) extending through the electrically nonconductive surface (4) outside of the framed portion (7) of the electrically nonconductive surface (4), wherein the second via (14) is electrically connected to one of the contacts (11), and
a lateral connector (15) electrically connecting the first via (13) and the second via (14), wherein the lateral connector (15) is arranged within the electrically nonconductive layer (3) or below the electrically nonconductive layer (3), so that the lateral electrical connector (15) is electrically insulated from the printed sensor layer (8, 9) in a range of the border portion (8) of the printed sensor layer (8, 9).

2. The chemo-resistive sensor device according to the previous claim, wherein the printed sensor layer (8, 9) of each of the chemo-resistive sensor arrangements (5) is manufactured by applying a dispersion above the framed portion (7) of the electrically nonconductive surface (4) and by drying the dispersion, wherein the dispersion comprises a solvent and an electrically conductive component.

3. The chemo-resistive sensor device according to one of the previous claims, wherein the printed sensor layer (8, 9) of each of the chemo-resistive sensor arrangements (5) is configured in such way that the electrical resistance of the printed sensor layer (8, 9) changes depending on a concentration of an ambient gas.

4. The chemo-resistive sensor device according to one of the previous claims, wherein the substrate (2) comprises an electrically conductive layer (16) arranged parallel to the electrically nonconductive layer (3) and below the electrically nonconductive layer (3), wherein the electrically conductive layer (5) acts as the lateral connector (15).

5. The chemo-resistive sensor device according to the previous claim, wherein the substrate (2) comprises a further electrically nonconductive layer (17) arranged parallel to the electrically conductive layer (16) and below the electrically conducting layer (16).

6. The chemo-resistive sensor device according to one of the previous claims, wherein each of the first electrodes (10.1) and the second electrodes (10.2) of the chemo-resistive sensor arrangements (5) is electrically connected to one of the contacts (11) individually.

7. The chemo-resistive sensor device according to one of the claims 1 to 5, wherein the second electrodes (10.2) of the pair of electrodes (10) of each of the chemo-resistive sensor arrangements (5) are electrically connected to a common contact (11.1) of the contacts (11), and wherein each of the first electrodes (10) of the pair of electrodes (10) of each of the chemo-resistive sensor arrangements (5) is electrically connected to one further contact (11.2-11.5) of the contacts (11) individually.

8. The chemo-resistive sensor device according to one of the previous claims, wherein the first electrode (10.1) of each the chemo-resistive sensor arrangements (5) comprises a frame-like portion (18) framing the second electrode (10.2) of the respective chemo-resistive sensor arrangement (5).

9. A method for manufacturing a chemo-resistive sensor device, the method comprising the steps:
providing a substrate (2) comprising an electrically nonconductive layer (3) having an electrically nonconductive surface (4) at an upper side of the electrically nonconductive layer (3);
manufacturing one or more chemo-resistive sensor arrangements (5) at the substrate (2), wherein manufacturing of each of the chemo-resistive sensor arrangements (5) comprises the steps of
forming a frame structure (6) defining an framed portion (7) of the electrically nonconductive surface (4),
arranging a pair of electrodes (10) at the framed portion (7) of the electrically nonconductive surface (4), and
printing a printed sensor layer (8, 9) covering the framed portion (7) of the electrically nonconductive surface (4), wherein the printed sensor layer (8, 9) comprises a border portion (8) adjacent to the frame structure (6) and a center portion (9) surrounded by the border portion (8), wherein the pair of electrodes (10) is arranged between the center portion (9) of the printed sensor layer (8, 9) and the framed portion (7) of the electrically nonconductive surface (4);
arranging a plurality of contacts (11) at the electrically nonconductive surface (4) outside of the one or more framed portions (7) of the electrically nonconductive surface (4), at each of the chemo-resistive sensor arrangements (5) electrically connecting each electrode (10) of the pair of electrodes (10) to one of the contacts (11) so that a change of an electrical resistance of the printed sensor layer (8, 9) of each of the chemo-resistive sensor arrangements (5) can be sensed at the plurality of contacts (11); and
manufacturing one or more upper connecting arrangements (12), wherein at each of the chemo-resistive sensor arrangements (5) a first electrode (10.1) of the pair of electrodes (10) is electrically connected to one of the contacts (11) by one of the upper connecting arrangements (12); and
manufacturing one or more lowered connecting arrangements (13, 14, 15), wherein at each of the chemo-resistive sensor arrangements (5) a second electrode (10.2) of the pair electrodes (10) is electrically connected to one of the contacts (11) by one of the lowered connecting arrangements (13, 14, 15);
wherein manufacturing of each of the lowered connecting arrangements (13, 14, 15) comprises the steps of
manufacturing a first via (13) extending through the framed portion (7) of the electrically nonconductive surface (4), wherein the first via (13) is electrically connected to one of the second electrodes (10.2),
manufacturing a second via (14) extending through the electrically nonconductive surface (4) outside of the framed portion (7) of the electrically nonconductive surface (4), wherein the second via (14) is electrically connected to one of the contacts (11), and
manufacturing a lateral connector (15) electrically connecting the first via (13) and the second via (14), wherein the lateral connector (15) is arranged within the electrically nonconductive layer (3) or below the electrically nonconductive layer (3), so that the lateral electrical connector (15) is electrically insulated from the printed sensor layer (8, 9) in a range of the border portion (8) of the printed sensor layer (8, 9).
